# EUROPÄISCHE PATENTSCHRIFT

(11) **EP 3 159 552 B1**
(45) Veröffentlichungstag und Bekanntmachung des Hinweises auf die Patenterteilung: **08.12.2021**
(21) Anmeldenummer: 16190519.5
(22) Anmeldetag: 26.09.2016
(51) Int. Cl.: F16B 5/04, F16B 5/06, F16B 19/10, F16B 35/06

(54) **SPREIZNIETVERBINDUNG UND VERFAHREN ZUR MONTAGE DERSELBEN**
EXPANDING RIVET CONNECTION AND METHOD OF MOUNTING THE SAME
LIAISON PAR RIVETS ET SON PROCEDE DE MONTAGE

(30) Priorität: 19.10.2015 DE 102015117784
(43) Veröffentlichungstag der Anmeldung: 26.04.2017
(73) Patentinhaber: Telefonaktiebolaget LM Ericsson (Publ), 164 83 Stockholm (SE)
(72) Erfinder: Mayer, Josef, 83233 Bernau am Chiemsee (DE)
(74) Vertreter: Ericsson

(56) Entgegenhaltungen:
- EP-A1- 0 903 508
- DE-U- 1 912 636
- DE-U- 1 979 958
- US-A- 5 718 549
- None

## Beschreibung

Die Erfindung betrifft eine Spreiznietverbindung gemäß dem Oberbegriff des Patentanspruchs 1 sowie ein Verfahren zur Montage derselben gemäß dem Oberbegriff des Patentanspruchs 12.

Spreiznieten werden bekanntlich zur Herstellung von nichtlösbaren Verbindungen von zwei Bauteilen verwendet, wobei die Kraftübertragung primär durch Formschluss erzeugt wird. Sie können die Verbindung mittels Schrauben, Scheiben und Muttern dort ersetzen, wo keine lösbare Verbindung erforderlich oder eine solche sogar unerwünscht ist.

Herkömmliche Spreizniete bestehen aus einem Bolzen mit Setzkopf und einem Spreiznietkörper. Zum Vernieten wird der Spreiznietkörper durch die vorher gestanzten oder gebohrten Nietlöcher der zu verbindenden Teile, z.B. der Montageplatte, gesteckt. Der Spreizniet wird am bereits vorhandenen Setzkopf mit einem Werkzeug als Gegenhalter festgehalten und das freie Ende des Spreiznietkörpers wird durch Druck- oder Schlagwirkung zum Schließkopf verformt. Diese Art der Vernietung kann nur an Nietstellen vorgenommen werden, die von beiden Seiten zugänglich sind.

Für eine Montage an Stellen, die nur von einer Seite zugänglich sind, kommen häufig sogenannte Blindniete zu Anwendung. Sie bestehen aus einem Hohlniet, der von der Seite des Schließkopfs von einem Nietzapfen mit einem Nietkopf, der auf dem Spreiznietkörper des Hohlniets aufliegt, und mit einem auf der Seite des Setzkopfes herausragenden Zugdorn, der über eine Sollbruchstelle mit dem Nietzapfen verbunden ist, durchsetzt wird. Zum Vernieten wird der Blindniet mit der Seite des Schließkopfes voraus in Nietlöcher gesteckt, bis der Setzkopf des Hohlniets aufsitzt. Danach wird der Nietzapfen durch kräftigen Zug am Zugdorn in den Hohlniet eingezogen. Dabei wird der Nietschaft gespreizt und verformt. Der Zugdorn reißt an seiner Sollbruchstelle ab. Die notwendige Zugkraft kann nur mit kraftverstärkenden Werkzeugen aufgebracht werden.

Spreizniete, die von einer Seite montiert werden können, sind im zulässigen Kraftaufnahmebereich bisher nicht durchgehend spielfrei. Das heißt, dass bei einer Krafteinleitung bis zum maximalen Nennbereich ein Verschieben der Fügepartner möglich ist.

Ferner müssen Spreizniete derzeit von zwei Seiten montiert werden, um eine spielfreie Verbindung zu erhalten. Dies ist insbesondere bei Hochfrequenz (HF)-Anwendungen, z.B. bei größeren Baugruppen wie Antennen, umständlich bzw. nicht praxisgerecht. Eine solche Verbindung ist beispielsweise in dem Deutschen Patent DE 19840014 C1 offenbart.

Weitere Spreizniete oder Spreizniet-ähnliche Anordnungen sind aus dem deutschen Gebrauchsmuster DE 19 79 958 U, welches einen klassischen "Fischer-Dübel" offenbart, bekannt. Das deutsche Gebrauchsmuster DE19 12 636 U offenbart einen Spreizdübel, bei dem die Backen durch Einbringen eines Stifts auseinandergedrückt werden.

Aus dem Stand der Technik ist keine einfache, einseitig montierbare Spreiznietverbindung bekannt, welche die Fügepartner bis zur Nennbelastung hält und eine spielfreie Verbindung der Fügepartner schafft. Deshalb ist es eine Aufgabe dieser Erfindung, eine solche einseitig montierbare Spreiznietverbindung bereitzustellen. Diese Aufgabe wird erfindungsgemäß durch die Merkmale der unabhängigen Patentansprüche gelöst. Vorteilhafte Ausgestaltungen sind Gegenstand der abhängigen Ansprüche.

Vorgeschlagen wird erfindungsgemäß eine Spreiznietverbindung zur Verbindung von zumindest zwei Fügepartnern, umfassend einen Spreizniet, der einen Spreiznietkörper, der derart gebildet ist, dass er durch Ausnehmungen des ersten Fügepartners in diesen eingesteckt werden kann, und einen Gewindeteil umfasst, der derart gebildet ist, dass er aus dem ersten Fügepartner nach dem Einstecken zumindest teilweise herausragt. Ferner umfasst die Spreiznietverbindung einen Spreiznietstift, der dazu eingerichtet ist, durch eine im Spreizniet angeordnete Öffnung in den Spreiznietkörper gedrückt zu werden, um durch den ersten Fügepartner hindurch zu ragen, sowie ein Klemmelement, das dazu eingerichtet ist, auf den Gewindeteil des Spreizniets aufgeschraubt zu werden, um einen dritten Fügepartner mit dem ersten Fügepartner zu verbinden.

In einer weiteren Ausführung wird eine Spreiznietverbindung zur Verbindung von zumindest drei Fügepartnern vorgeschlagen, wobei der Spreiznietkörper derart gebildet ist, dass er zusätzlich durch Ausnehmungen eines auf dem ersten Fügepartner angeordneten zweiten Fügepartners eingesteckt werden kann, und der Gewindeteil derart gebildet ist, dass er aus dem ersten Fügepartner und dem zweiten Fügepartner nach dem Einstecken zumindest teilweise herausragt, und der Spreiznietstift dazu eingerichtet ist, durch die im Spreizniet angeordnete Öffnung in den Spreiznietkörper gedrückt zu werden, um den ersten Fügepartner und den zweiten Fügepartner miteinander zu verbinden. Ferner ist das Klemmelement dazu eingerichtet, auf den Gewindeteil des Spreizniets aufgeschraubt zu werden, um zumindest den dritten Fügepartner, der auf dem mit dem ersten Fügepartner verbundenen zweiten Fügepartner angeordnet ist, zu verbinden.

In einer weiteren Ausführung ist vorgesehen, dass das Klemmelement als Federelement in Form einer Mutter mit daran angeordneter Tellerfeder ausgebildet ist.

Durch die Verbindung der ersten beiden Fügepartner über den Spreizniet und den Spreiznietstift erfolgt sozusagen eine Vormontage, d.h. die beiden Fügepartner sind bereits fest genug miteinander verbunden, so dass sie einem Zwischenschritt ausgesetzt werden können, bevor ein oder mehrere weitere Fügepartner über das Klemmelement an den beiden Fügepartnern verbunden werden. Ein solcher Zwischenschritt kann ein Einbringen in z.B. ein Schwallbad sein, um eine elektrische Kontaktierung zwischen dem ersten und dem zweiten Fügepartner herzustellen.

Durch die Verbindung des dritten Fügepartners über das Klemmelement entsteht eine Vorspannung der Verbindung der Fügepartner. Durch diese Vorspannung können alle Fügepartner spielfrei miteinander verbunden werden, auch wenn Schwankungen in der Dicke der Fügepartner vorliegen.

In einer weiteren Ausführung ist vorgesehen, dass der Spreiznietkörper rund oder n-eckig ausgeführt ist und der Gewindeteil n-eckig ausgeführt ist.

Die n-eckige Ausführung des Gewindeteils ermöglicht die einseitige Montage der Spreiznietverbindung, da sie eine Verdrehsicherung darstellt. Der Spreiznietkörper kann rund oder n-eckig ausgeführt sein, dies hängt von der Anwendung ab. Auch können Einschnitte oder andere konstruktive Merkmale zur Optimierung der Herstellung der Verbindung und der Verdrehsicherung vorhanden sein.

In einer weiteren Ausführung ist vorgesehen, dass an dem Spreizniet zumindest zwischen dem Spreiznietkörper und dem Gewindeteil zumindest ein Anschlag angeordnet ist. Vorteilhafterweise ist der Anschlag derart ausgebildet, dass eine dem Gewindeteil zugewandte Oberfläche davon als Sicherung vor Herausziehen des Spreizniets beim Festschrauben des Klemmelements dient, und wobei die Dicke des Anschlags den Weg der durch Anschrauben des Klemmelements (13) erzeugte Vorspannung vorgibt.

Der Anschlag dient vor allem dazu, ein Herausziehen des Spreizniets bei Anziehen des Klemmelements zu verhindern. Durch das Bereitstellen des Anschlags kann eine weggesteuerte Vorspannung realisiert werden, so dass Reibungskräfte, die durch Material oder Konstruktion entstehen, keine Rolle beim Anziehen des Klemmelements spielen, so dass eine spielfreie Verbindung zwischen den Fügepartnern erzielt werden kann. Die Dicke des Anschlags gibt dabei den Weg der Vorspannung vor. Durch die Anordnung weiterer Anschläge, z.B. auf dem Gewindeteil, können unterschiedliche Vorspannungskräfte zwischen Fügepartnern realisiert werden, um eine spielfreie Verbindung zu realisieren.

In einer weiteren Ausführung ist vorgesehen, dass an dem Spreizniet zwischen dem Spreiznietkörper und dem Gewindeteil zumindest ein Abstandshalter angeordnet ist. Gemäß einer Ausführung ist der Abstandshalter an dem Spreizniet über zumindest ein federndes Element verbunden. Gemäß einer weiteren Ausführung sind zwei Abstandshalter sich gegenüberliegend an dem Spreizniet zwischen dem Spreiznietkörper und dem Gewindeteil angeordnet. Gemäß einer Ausführung entspricht die Dicke des Abstandshalters dem Abstand zwischen zwei Fügepartnern. In einer weiteren Ausführung ist vorgesehen, dass jeder der der Abstandshalter unterschiedlich oder gleich als Zylinder, als Kugel, Kegel oder Doppelkegel ausgebildet ist oder eine rechteckige Form aufweist. Gemäß einer weiteren Ausführung ist der Abstandshalter um den gesamten Umfang des Gewindeteils gebildet.

Der Abstandshalter gleicht einen Abstand zwischen zwei Fügepartnern aus. Ein solcher Abstand kann aufgrund von Dickenschwankungen bei der Herstellung entstehen oder durch die Fügepartner vorgegeben sein. Bei HF-Anwendungen kann der Abstand beispielsweise dadurch entstehen, dass ein Schirmdeckel als Fügepartner verwendet wird, der durch seine Form und Funktion einen Abstand zu seinem Fügepartner bildet. Der Abstandshalter dient dann auch dazu, die durch das Klemmelement entstehende Kraft auf den entsprechenden Fügepartner zu kompensieren, so dass dieser keine Verformung erfährt. Dies wird durch das federnde Element unterstützt, da durch dieses eine Bewegung des Abstandshalters bei der Montage ermöglicht wird. Somit bleiben die vorgespannten Fügepartner auch bei thermischer oder mechanischer Belastung durch Umwelteinflüsse in der vorgegebenen Position. Auch wird dies durch eine Form, bei der eine Bewegung aufgrund der darauf wirkenden Kräfte möglich ist, unterstützt. Dadurch wird das zumindest eine federnde Element weniger stark belastet und nicht verbogen.

Des Weiteren ist erfindungsgemäß vorgesehen, dass der Spreiznietkörper und/oder der Gewindeteil und/oder der Spreiznietstift und/oder das Klemmelement aus Glasfaserkunststoff gebildet sind.

Glasfaserkunststoff ist ein sehr hartes Material, das bei kleiner Bauteilgröße hohe Kräfte aufnehmen kann ohne beschädigt zu werden oder sich zu verformen, so dass eine höherfeste Verbindung entsteht. Somit kann eine spielfreie Verbindung sichergestellt werden.

Vorgesehen ist im Rahmen der vorliegenden Erfindung des Weiteren ein Verfahren zur Montage der Spreiznietverbindung nach einem der vorhergehenden Ansprüche, umfassend folgende Schritte:
- Schritt 1: Einstecken des Spreiznietkörpers des Spreizniets in Ausnehmungen des ersten Fügepartners (21) und des bzw. der weiteren Fügepartner (22), wenn vorhanden,
- Schritt 2: Einstecken des Spreiznietstifts in die Öffnung des Spreizniets, so dass eine feste Verbindung zwischen dem ersten Fügepartner (21) und dem bzw. den weiteren Fügepartnern (22) entsteht, wenn vorhanden,,
- Schritt 3: Aufbringen zumindest eines dritten Fügepartners auf den ersten Fügepartner oder dem bzw. den mit dem ersten Fügepartner verbundenen weiteren Fügepartnern über den Gewindeteil des Spreizniets,,
- Schritt 4: Befestigen des zumindest einen dritten Fügepartners mittels des Klemmelements an dem ersten Fügepartner oder dem mit dem bzw. den ersten Fügepartner verbundenen weiteren Fügepartnern.

Vorgesehen ist ferner, dass das Verfahren zwischen den Schritten 2 und Schritt 3 einen weiteren Schritt 2a umfasst, nämlich beispielsweise dem Einbringen des mit dem Spreizniet versehenen ersten Fügepartners oder der mit dem Spreizniet verbundenen ersten und weiteren Fügepartner in eine Einrichtung zur Erzeugung einer elektrischen Verbindung der Fügepartner.

Die Vorteile der stufenweisen Montage sind oben beschrieben.

Durch die erfindungsgemäße Spreiznietverbindung und das Verfahren ist es möglich, zwei oder mehr als zwei Fügepartner miteinander spielfrei zu verbinden. Dabei ist eine hohe Flexibilität bei der Montage der dritten und weiteren Fügepartner durch den vorhandenen aus den Fügepartnern herausragenden Gewindeteil möglich. Durch die Vormontage des ersten Fügepartners bzw. der ersten miteinander zu verbindenden Fügepartner entsteht bereits eine feste Verbindung, so dass es möglich ist, einen oder mehrere Zwischenschritte vor der Montage des dritten und weiterer Fügepartner durchzuführen.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert.
Fig. 1 zeigt eine Schnittdarstellung einer montierten Spreiznietverbindung gemäß einer nicht durch die beanspruchte Erfindung abgedeckte Ausführung.
Fig. 2 zeigt eine Schnittdarstellung eines Spreizniets gemäß einer weiteren Ausführung der vorliegenden Erfindung.
Fig. 3 zeigt eine Schnittdarstellung einer Ansicht des Abstandshalters eines montierten Spreizniets aus Figur 2 gemäß einer Ausführung der vorliegenden Erfindung.
Fig. 4 zeigt eine Schnittdarstellung einer Ansicht des Anschlags eines montierten Spreizniets aus Figur 2 gemäß einer Ausführung der vorliegenden Erfindung.

In den nachfolgenden Figurenbeschreibungen sind gleiche Elemente bzw. Funktionen mit gleichen Bezugszeichen versehen.

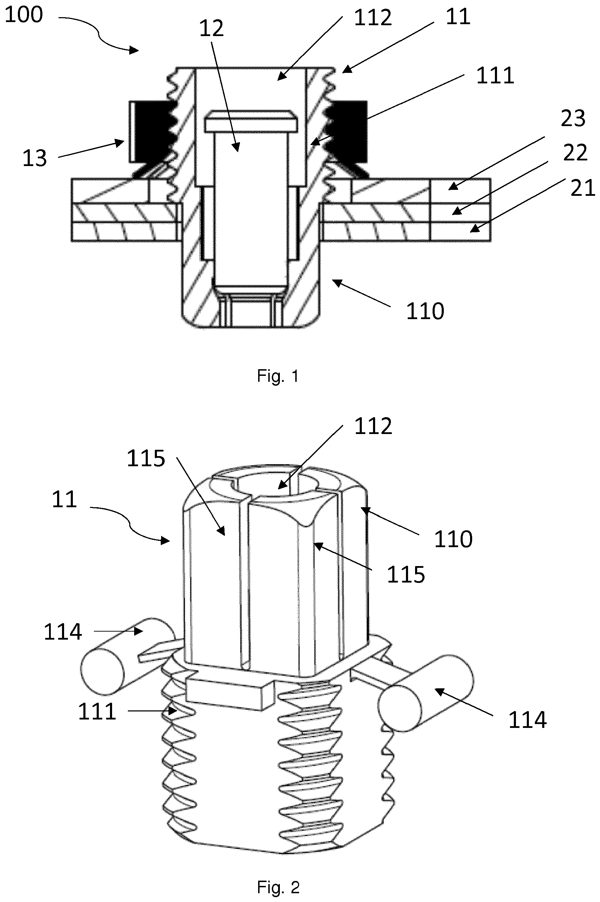

Figur 1 (nicht durch die beanspruchte Erfindung abgedeckte Ausführung) zeigt eine Schnittdarstellung einer Spreiznietverbindung 100, welche in dieser Darstellung drei Fügepartner 21, 22, 23 miteinander verbindet, wobei in dieser Ansicht der Spreiznietstift 12 noch nicht vollständig in den Spreizniet 11 eingedrückt ist. Die Spreiznietverbindung 100 umfasst drei Teile: einen Spreizniet 11, einen in eine entsprechende Öffnung des Spreizniets 11 eingeführten Spreiznietstift 12, sowie ein hier als Federelement in Form einer Mutter mit Tellerfeder ausgebildetes Klemmelement 13. Das Klemmelement 13 muss nicht unbedingt als Federelement ausgebildet sein, es kann vielmehr auch als Mutter oder Bajonettverschluss ausgebildet sein.

Der Spreizniet 11 ist im Wesentlichen in zwei Teile unterteilt, einen Spreiznietkörper 110, der derart gebildet ist, dass er nach vollständiger Montage in die Fügepartner 21, 22 und 23 eintaucht, und einen Gewindeteil 111, der derart gebildet ist, dass er nach Einstecken des Spreizniets 11 in die entsprechenden Montagelöcher der Fügepartner 21, 22 und 23 zumindest teilweise aus diesen herausragt. Der Spreizniet 11 wird zuerst zur Herstellung der Verbindung in Montagelöcher von zwei der Fügepartner 21, 22 eingesteckt. Vorzugsweise weist der Spreizniet 11 an der Grenze zwischen Spreiznietkörper 110 und Gewindeteil 111 einen in Figur 2 gezeigten Anschlag 113 auf, bis zu dem der Spreizniet 11 in die Montagelöcher der Fügepartner 21, 22 eingesteckt wird.

Der Spreiznietstift 12 wird durch eine im Spreizniet 11 angeordnete Öffnung 112 in den Spreizniet 11 von der gleichen Seite her gedrückt, wie der Spreizniet 11 in die Fügepartner 21, 22. Somit entsteht bereits nach dem ersten Teil der Montage eine feste Verbindung zwischen zwei Fügepartnern 21, 22. Diese Fügepartner 21, 22 sind bei HF-Anwendungen in der Regel ein auf einer Leiterplatte angeordnetes Antennenelement 21, beispielsweise ein Dipol, und ein Schirmdeckel 22. Die Verbindung erfolgt derart, dass der Gewindeteil 111 des Spreizniets 11 auf der dem Dipol abgewandten Seite, also der Unterseite der Leiterplatte, herausragt, wobei dies je nach Anwendung auch anders sein kann.

Durch das Aufspreizen der in Figur 2 gezeigten Backen 115 des Spreiznietkörpers 110 kann das System leicht Dickentoleranzen der Fügepartner 21, 22 ausgleichen, da kein Hinterschnitt der Backen am Fügepartner 21, 22 zum Klemmen notwendig ist, sondern eine hohe Reibkraft am Fügepartner 21, 22 erzeugt wird.

Die Form des Spreizniets 11 ist hauptsächlich von den Vorgaben für die Anwendung abhängig, ist aber aufgrund der Montage von einer Seite vorteilhafterweise derart, dass eine Verdrehsicherheit gegeben ist. Dies ist dadurch zu realisieren, dass der Gewindeteil 111 des Spreizniets 11 nicht rund ist, sondern eine Struktur, vorteilhafterweise eine n-eckige Form aufweist, d.h. zumindest an einer Seite abgeflacht ist, um das darauf wirkende Drehmoment abzufangen. Der Spreiznietkörper 110 kann hingegen rund oder n-eckig ausgebildet sein. Durch eine nicht vollständig rund ausgebildete Form entsteht eine Verdrehsicherung bzw. fixierte Bauteilausrichtung, z.B. zwischen Dipol und Schirmdeckel.

Nun können bei Bedarf die beiden bereits fest miteinander verbundenen Fügepartner 21, 22 in einem Zwischenschritt prozessiert werden, z.B. elektrisch miteinander verbunden werden. Dies kann beispielsweise geschehen, indem sie durch ein Schwallbad zum Verlöten geschickt werden.

Durch Spreizniet 11 und Spreiznietstift 12 werden die ersten beiden Fügepartner 21, 22 fest miteinander verbunden. Um einen weiteren Fügepartner 23 mit den beiden bereits befestigten Fügepartnern 21, 22 zu verbinden, wird ein als Federelement ausgebildetes Klemmelement 13 bereitgestellt. Dieses Federelement 13 wird auf den Gewindeteil 111 des Spreizniets 11 aufgeschraubt, um zumindest einen auf den beiden verbundenen Fügepartnern 21, 22 angeordneten dritten Fügepartner 23 mit den beiden verbundenen Fügepartnern 21, 22 derart zu verbinden, dass eine Vorspannung der Verbindung der Fügepartner 21, 22, 23 entsteht.

Der dritte Fügepartner 23 kann in HF-Anwendungen eine Adapterplatte oder ein anderes Bauteil sein, das auf die Rückseite des zweiten Fügepartners 22 aufgebracht werden soll, z.B. einer mit einem Schirmdeckel verbundenen Leiterplatte mit einem darauf angeordneten Dipol.

Das Federelement 13 ist bevorzugt als Mutter mit Tellerfeder ausgebildet, da hier eine einfache Kraft bzw. Drehmomenten gesteuerte Vorspannung erzeugt werden kann. Durch das als Mutter mit Tellerfeder ausgebildete Federelement 13 kann die Verbindung exakt vorgespannt und ein eventuelles Setzen der Fügepartner 21, 22, 23 oder ein Ausdehnen der Fügepartner 21, 22, 23 aufgrund von Temperaturschwankungen ausgeglichen werden. Bevorzugt wird die Tellerfeder mit Schlitzen bereitgestellt, wobei dies je nach Anwendung auch nicht nötig sein kann. Durch Weglassen oder Verringern der Anzahl der Schlitze wird eine höhere Federrate benötigt, also mehr Kraft, um die Feder bis zur gleichen Stellung zusammenzudrücken.

Aufgrund des Federelements 13 mit der Möglichkeit, über das Gewinde eine entsprechende Kraft auf die Fügepartner 21, 22 und 23 auszuüben, d.h. eine Vorspannung zu erzeugen, wird eine spielfreie Verbindung über den gesamten Fügebereich zwischen den Fügepartnern 21, 22 und 23 erreicht.

Durch den aus den Fügepartnern 21, 22 und 23 herausragenden Gewindeteil 111 des Spreizniets 11 können zusätzlich zu dem dritten Fügepartner 23 weitere (nicht gezeigte) Fügepartner hinzugefügt werden. Dies kann geschehen, indem diese weiteren Fügepartner direkt auf den dritten Fügepartner 23 aufgebracht werden, oder über ein weiteres Federelement sozusagen kopfüber oder spiegelverkehrt montiert werden. Als weitere Möglichkeit des Hinzufügens eines Fügepartners, z.B. eines Reflektors bei HF-Anwendungen, kann dieser über das Federelement 13 in Form einer Ausbuchtung oder einer Öffnung aufgebracht und mittels einer Überwurfmutter befestigt werden. Zusätzlich können auch weitere Anschläge an dem Gewindeteil 111 des Spreizniets 11 angebracht werden, wenn dies für die jeweilige Anwendung nötig oder vorteilhaft ist.

Bevorzugt wird die gesamte Spreiznietverbindung 100 aus einem Glasfaserkunststoff gefertigt, wobei auch nur einzelne Teile davon aus diesem Material gebildet sein können. Glasfaserkunststoff ist im Vergleich zu bisher verwendetem Polyamid-Kunststoff wie Nylon deutlich härter, d.h. es können größere Kräfte aufgenommen werden. Dies ermöglicht es, mit hohen Kräften und Vorspannungen zu arbeiten.

Figur 2 zeigt Ansicht eines Spreizniets 11 gemäß einer weiteren Ausführung. Die in Figur 1 verwendeten Bezugszeichen bezeichnen dieselben Elemente, weshalb hier eine Wiederholung weggelassen wird. Der gezeigte Spreizniet 11 umfasst zusätzlich zu dem Anschlag 113 zumindest einen Abstandshalter 114 am Übergang zwischen dem Spreiznietkörper 110 und dem Gewindeteil 111. Der Abstandshalter 114 ist über ein federndes Element an dem Spreizniet 11 befestigt, so dass er sich in und gegen die Einsteckrichtung des Spreizniets 11 bewegen kann. Bevorzugt liegen sich zwei Anschläge 113 und zwei Abstandshalter 114 gegenüber.

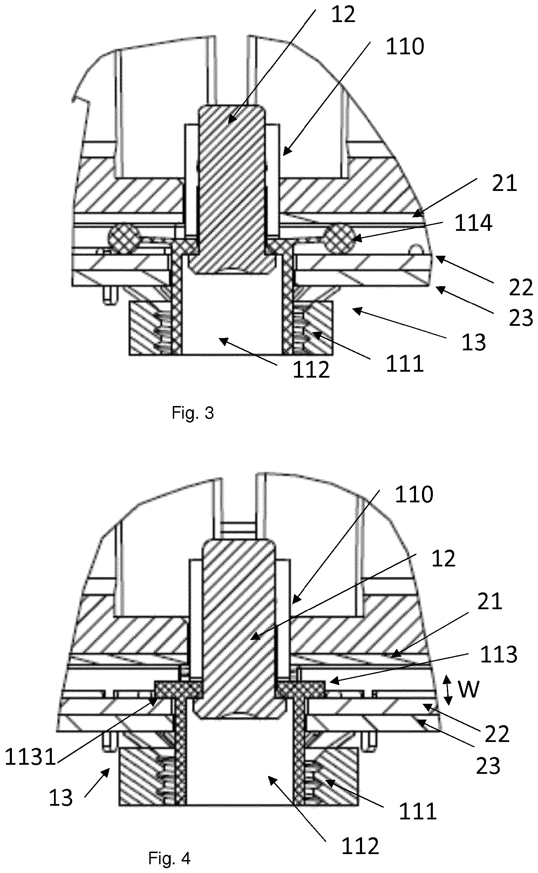

Die Abstandshalter 114 sind in Figur 2 als Zylinder ausgebildet, können aber auch andere Formen aufweisen, solange sie die erwünschte Dicke aufweisen. Je weiter sich die Form von einem Kreis bzw. Zylinder entfernt, desto höhere Federraten müssen aufgewendet werden. Dies wird mit Bezug zu Figur 3 näher erläutert.

Der Abstandshalter 114 kann auch vollständig um den Spreizniet 11 herum gebildet sein, wobei hier darauf zu achten ist, dass keine Beeinträchtigung der Eigenschaften der Fügepartner 21 oder 22 erfolgt.

Figur 3 zeigt eine Schnittdarstellung einer Ansicht des Abstandshalters 114 eines Spreizniets 11 aus Figur 2. Die in Figuren 1 und 2 verwendeten Bezugszeichen bezeichnen dieselben Elemente, weshalb hier eine Wiederholung weggelassen wird. Die in Figur 3 gezeigte Darstellung zeigt vollständig vorgespannte und über den Abstandshalter 114 gefederte Fügeelemente 21, 22, 23, d.h. die Mutter 13 ist bis auf die vollständige Vorspannung der Tellerfeder gedreht. Der Anschlag 113 und der Abstandshalter 114 befinden sich zwischen dem ersten Fügepartner 21, der bei HF-Anwendungen ein Antennenelement, z.B. ein auf einer Leiterplatte angeordneter Dipol, sein kann, und dem zweiten Fügepartner 22, der bei HF-Anwendungen ein Schirmdeckel sein kann. Da der Schirmdeckel 22 von der Leiterplatte über seine Pins bzw. Anschlüsse in einem vorbestimmten Abstand, z.B. 2 mm, angeordnet ist, kann beim Befestigen der Mutter mit zu großer aufgewendeter Kraft ein Eindrücken des Schirmdeckels und damit eine Beschädigung desselben erfolgen. Außerdem wäre in einem solchen Fall die Flächenpressung verringert. Durch den Abstandshalter 114 wird dieser Nachteil überwunden. Aufgrund der federnden Elemente des Abstandshalters 114 kann ein Ausgleich bei Schwankungen in der Dicke des Abstands erfolgen.

Bevorzugt weist der Abstandshalter 114, wie in Figur 3 gezeigt, eine zylindrische oder kugelartige Form auf, da dadurch kleinere Federraten aufgewendet werden müssen. Dies liegt darin begründet, dass durch das Andrehen des Klemmelements 13 eine Vorspannung erzeugt wird. Die wirkenden Kräfte werden durch den Abstandshalter 114 mit seinen federnden Elementen aufgenommen. Durch die Form des Abstandshalters wird bestimmt, ob die federnden Elemente durch höhere Krafteinwirkung, also höhere Federraten, verbogen werden müssen, oder ob der Abstandshalter sich sozusagen auf der Stelle drehen bzw. abrollen kann. Das heißt, dass sich die federnden Elemente durch die Drehung bzw. das Abrollen des Abstandshalters 114 nicht verbiegen, sondern ihre federnde Wirkung voll ausschöpfen können. Die auf einen derart geformten Abstandshalter 114 wirkenden Reibungskräfte sind deutlich geringer als die darauf wirkende Drehkraft. Deshalb ist bei einer nicht eckigen Form des Abstandshalters 114, z.B. der Form einer Kugel oder eines Zylinders, eine deutlich geringere Federrate aufzuwenden als bei einer sich von einem Kreis entfernenden Form des Abstandhalters 114.

Figur 4 zeigt eine Schnittdarstellung einer Ansicht des Anschlags 113 eines Spreizniets 11 aus Figur 2. Diese Ansicht entspricht der Ansicht aus Figur 3, nur um 90 Grad gedreht. Die in Figuren 1, 2 und 3 verwendeten Bezugszeichen bezeichnen dieselben Elemente, weshalb hier eine Wiederholung weggelassen wird. Die in Figur 4 gezeigte Darstellung zeigt vollständig vorgespannte und über den Abstandshalter 114 gefederte Fügeelemente 21, 22, 23, d.h. die Mutter 13 ist bis auf die vollständige Vorspannung der Tellerfeder gedreht. Der Anschlag 113 und der Abstandshalter 114 befinden sich zwischen dem ersten Fügepartner 21, der bei HF-Anwendungen ein Antennenelement, z.B. ein auf einer Leiterplatte angeordneter Dipol, sein kann, und dem zweiten Fügepartner 22, der bei HF-Anwendungen ein Schirmdeckel sein kann. Der Anschlag 113 hat bevorzugt eine kleinere Dicke als der Abstand zwischen den beiden Fügepartnern 21 und 22. Der Anschlag 113 weist eine der Gewindeseite 111 des Spreizniets 11 zugewandte Oberfläche 1131 auf, durch deren Anordnung ein Herausziehen des Spreizniets 11 bei Anziehen des Klemmelements 13 verhindert wird. Dabei kann der Spreizniet 11 zwar eine gewisse Strecke, z.B. 1 mm, durch das Bauteil, hier dem Schirmdeckel 21, hindurch gezogen werden, aber er steht dann an dem Fügepartner 22 mit seiner Oberfläche 1131 an, so dass kein weiteres Herausziehen des Spreizniets 11 mehr erfolgen kann. Das heißt, dass durch diesen Anschlag 113 eine weggesteuerte Vorspannung möglich ist, wobei die Dicke des Anschlags und der Abstand zwischen den Fügepartnern den Weg W der Vorspannung vorgibt. Dies hat den Vorteil, dass bei der Montage sehr genau eingestellt werden kann, wie weit der Spreizniet 11 angezogen werden muss, um eine spielfreie Verbindung der Fügepartner zu erzielen. Um die Verbindung dann endgültig festzuziehen kann die Mutter Drehmomenten gesteuert festgezogen werden, wobei durch den Anschlag 113 kein Durchdrehen oder Herausziehen des Spreizniets 11 erfolgen kann.

Zusätzlich können durch den Anschlag 113 bzw. mehrere an unterschiedlichen Stellen des Spreizniets 11 platzierte (in den Figuren nicht gezeigte) Anschläge 113 unterschiedliche Vorspannkräfte zwischen unterschiedlichen Fügepartnern, z.B. zwischen Dipol und Schirmdeckel und zwischen Leiterplatte und Adapterplatte, realisiert werden.

Durch die erfindungsgemäße Spreiznietverbindung wird die Möglichkeit eröffnet, eine mehrstufige Montage bereitzustellen. Das heißt, dass zuerst zwei Fügepartner mittels Spreizniet und Spreiznietstift miteinander verbunden werden oder nur ein Spreizniet mit Spreiznietstift in einen einzigen Fügepartner gesteckt wird. Diese verbundenen Partner können dann in einem Verfahrensschritt wie einem Lötschwallbad oder anderen Schritten ausgesetzt werden, um beispielsweise elektrisch miteinander kontaktiert zu werden. Danach können ein oder mehrere weitere Fügepartner von der gleichen Seite mittels des Gewindeteils und des Federelements auf den beiden Fügepartnern montiert werden, so dass eine spielfreie Verbindung entsteht. Ferner ist durch die Vorspannung ein Dickenausgleich sowie ein Ausgleich von Schwankungen zwischen den Fügepartnern möglich, so dass ein Verschieben der Fügepartner zueinander verhindert wird. Durch das Bereitstellen eines Anschlags wird eine weggesteuerte Vorspannung realisiert und verhindert, dass der Spreizniet beim Anziehen des Klemmelements aus den Fügepartnern herausgezogen wird.

### Bezugszeichenliste

- 100: Spreiznietverbindung
- 11: Spreizniet
- 110: Spreiznietkörper
- 111: Gewindeteil
- 112: Öffnung im Spreizniet
- 113: Anschlag
- 1131: Oberseite des Anschlags
- 114: Abstandshalter
- 115: Backen
- 12: Spreiznietstift
- 13: Klemmelement
- 21: Erster Fügepartner
- 22: Zweiter Fügepartner
- 23: Dritter Fügepartner
- W: Weg der Vorspannung

## Patentansprüche

1. Spreiznietverbindung (100) zur Verbindung von zumindest zwei Fügepartnern (21, 23), umfassend:
- einen Spreizniet (11), umfassend
einen Spreiznietkörper (110), der derart gebildet ist, dass er durch Ausnehmungen des ersten Fügepartners (21) in diesen eingesteckt werden kann, und
einen Gewindeteil (111), der derart gebildet ist, dass er aus dem ersten Fügepartner (21) nach dem Einstecken zumindest teilweise herausragt,
- einen Spreiznietstift (12), der dazu eingerichtet ist, durch eine im Spreizniet (11) angeordnete Öffnung (112) in den Spreiznietkörper (110) gedrückt zu werden, um durch den ersten Fügepartner (21) hindurch zu ragen, und
- ein Klemmelement (13), das dazu eingerichtet ist, auf den Gewindeteil (111) des Spreizniets (11) aufgeschraubt zu werden, um zumindest einen dritten Fügepartner (23) mit dem ersten Fügepartner (21) zu verbinden, wobei an dem Spreizniet (11) zumindest zwischen dem Spreiznietkörper (110) und dem Gewindeteil (111) zumindest ein Anschlag (113) angeordnet ist, und wobei an dem Spreizniet (11) zwischen dem Spreiznietkörper (110) und dem Gewindeteil (111) zumindest ein Abstandshalter (114) angeordnet ist.

2. Spreiznietverbindung (100) nach Anspruch 1 zur Verbindung von zumindest drei Fügepartnern (21, 22, 23), wobei:
- der Spreiznietkörper (110) derart gebildet ist, dass er zusätzlich durch Ausnehmungen eines auf dem ersten Fügepartner (21) angeordneten zweiten Fügepartners (22) eingesteckt werden kann, und
- der Gewindeteil (111) derart gebildet ist, dass er aus dem ersten Fügepartner (21) und dem zweiten Fügepartner (22) nach dem Einstecken zumindest teilweise herausragt,
- der Spreiznietstift (12) dazu eingerichtet ist, durch die im Spreizniet (11) angeordnete Öffnung (112) in den Spreiznietkörper (110) gedrückt zu werden, um den ersten Fügepartner (21) und den zweiten Fügepartner (22) miteinander zu verbinden, und
- das Klemmelement (13) dazu eingerichtet ist, auf den Gewindeteil (111) des Spreizniets (11) aufgeschraubt zu werden, um zumindest einen dritten Fügepartner (23), der auf dem mit dem ersten Fügepartner (21) verbundenen zweiten Fügepartner (22) angeordnet ist, zu verbinden.

3. Spreiznietverbindung nach Anspruch 1 oder 2, wobei das Klemmelement (13) als Federelement in der Form einer Mutter mit daran angeordneter Tellerfeder ausgebildet ist.

4. Spreiznietverbindung nach einem der vorhergehenden Ansprüche, wobei der Spreiznietkörper (110) rund oder n-eckig und der Gewindeteil (111) n-eckig ausgeführt ist.

5. Spreiznietverbindung nach einem der vorhergehenden Ansprüche, wobei der Anschlag (113) derart ausgebildet ist, dass eine dem Gewindeteil (111) zugewandte Oberfläche (1131) davon als Sicherung vor Herausziehen des Spreizniets (11) beim Festschrauben des Klemmelements (13) dient, und wobei die Dicke des Anschlags (113) den Weg (W) der durch Anschrauben des Klemmelements (13) erzeugten Vorspannung vorgibt.

6. Spreiznietverbindung nach einem der vorhergehenden Ansprüche, wobei der Abstandshalter (114) an dem Spreizniet (11) über zumindest ein federndes Element verbunden ist.

7. Spreiznietverbindung nach einem der vorhergehenden Ansprüche, wobei zwei Abstandshalter (114) sich gegenüberliegend an dem Spreizniet (11) zwischen dem Spreiznietkörper (110) und dem Gewindeteil (111) angeordnet sind.

8. Spreiznietverbindung nach einem der vorhergehenden Ansprüche, wobei die Dicke des Abstandshalters (114) dem Abstand zwischen dem ersten und dem zweiten Fügepartner (21, 22) entspricht.

9. Spreiznietverbindung nach einem der vorhergehenden Ansprüche, wobei jeder der Abstandshalter (114) unterschiedlich oder gleich als Zylinder, als Kugel, Kegel oder Doppelkegel ausgebildet ist oder eine rechteckige Form aufweist.

10. Spreiznietverbindung nach einem der vorhergehenden Ansprüche, wobei der Abstandshalter (114) um den gesamten Umfang des Gewindeteils (111) gebildet ist.

11. Spreiznietverbindung nach einem der vorhergehenden Ansprüche, wobei der Spreiznietkörper (110) und/oder der Gewindeteil (111) und/oder der Spreiznietstift (12) und/oder das Klemmelement (13) aus Glasfaserkunststoff gebildet sind.

12. Verfahren zur Montage der Spreiznietverbindung (100) nach einem der vorhergehenden Ansprüche, umfassend folgende Schritte:
- Schritt 1: Einstecken des Spreiznietkörpers (110) des Spreizniets (11) in Ausnehmungen des ersten Fügepartners (21) und des bzw. der weiteren Fügepartner (22), wenn vorhanden,
- Schritt 2: Einstecken des Spreiznietstifts (12) in die Öffnung (112) des Spreizniets (11), so dass eine feste Verbindung zwischen dem ersten Fügepartner (21) und dem bzw. den weiteren Fügepartnern (22) entsteht, wenn vorhanden,
- Schritt 3: Aufbringen zumindest eines dritten Fügepartners (23) auf den ersten Fügepartner (21) oder dem bzw. den mit dem ersten Fügepartner (21) verbundenen weiteren Fügepartnern (22) über den Gewindeteil (111) des Spreizniets (11),
- Schritt 4: Befestigen des zumindest einen dritten Fügepartners (23) mittels des Klemmelements (13) an dem ersten Fügepartner (21) oder dem bzw. den mit dem ersten Fügepartner (21) verbundenen weiteren Fügepartnern (22), wobei an dem Spreizniet (11) zumindest zwischen dem Spreiznietkörper (110) und dem Gewindeteil (111) zumindest ein Anschlag (113) angeordnet ist, und wobei an dem Spreizniet (11) zwischen dem Spreiznietkörper (110) und dem Gewindeteil (111) zumindest ein Abstandshalter (114) angeordnet ist.

13. Verfahren nach Anspruch 12, wobei das Verfahren zwischen den Schritten 2 und 3 einen weiteren Schritt 2a umfasst: Einbringen des mit dem Spreizniet (11) versehenen ersten Fügepartners (21) oder der mit dem Spreizniet (11) verbundenen ersten und weiteren Fügepartner (21, 22) in eine Einrichtung zur Erzeugung elektrischer Kontaktierungen der Fügepartner (21, 22).

## Claims

1. Expanding rivet connection (100) for connecting at least two joining partners (21, 23), comprising:
- an expanding rivet (11), comprising
an expanding rivet body (110), which is formed such that it can be inserted into the first joining partner (21) through recesses in said joining partner, and
a threaded part (111) which is formed such that it protrudes at least partially from the first joining partner (21) after having been inserted,
- an expanding rivet pin (12) which is set up to be pressed through an opening (112) arranged in the expanding rivet (11) into the expanding rivet body (110) to protrude through the first joining partner (21), and
- a clamping element (13) which is set up to be screwed onto the threaded part (111) of the expanding rivet (11) in order to connect at least one third joining partner (23) to the first joining partner (21), wherein at least one stop (113) is arranged on the expanding rivet (11) between the expanding rivet body (110) and the threaded part (111), and wherein at least one spacer (114) is arranged on the expanding rivet (11) between the expanding rivet body (110) and the threaded part (111) .

2. Expanding rivet connection (100) according to claim 1 for connecting at least three joining partners (21, 22, 23), wherein:
- the expanding rivet body (110) is formed such that it can additionally be inserted through recesses of a second joining partner (22) arranged on the first joining partner (21), and
- the threaded part (111) is formed such that it protrudes at least partially from the first joining partner (21) and the second joining partner (22) after having been inserted,
- an expanding rivet pin (12) which is set up to be pressed through an opening (112) arranged in the expanding rivet (11) into the expanding rivet body (110) to connect the first joining partner (21) and the second joining partner (22) with each other, and
- the clamping element (13) is set up to be screwed onto the threaded part (111) of the expanding rivet (11) in order to connect at least one third joining partner (23) arranged on the second joining partner (22) connected to the first joining partner (21).

3. Expanding rivet connection according to claim 1 or 2, wherein the clamping element (13) is designed as a spring element in the form of a nut with a spring washer arranged on the same.

4. Expanding rivet connection according to any one of the preceding claims, wherein the expanding rivet body (110) is round or is a polygon with n sides and the threaded part (111) is a polygon with n sides.

5. Expanding rivet connection according to any one of the preceding claims, wherein the stop (113) is designed in such a way that a surface (1131) of said stop, which faces the threaded part (111), serves as a safeguard against pulling out the expanding rivet (11) when tightening the clamping element (13), and wherein the thickness of the stop (113) specifies the distance (W) of the preload generated by tightening the clamping element (13).

6. Expanding rivet connection according to any one of the preceding claims, wherein the spacer (114) is connected to the expanding rivet (11) via at least one spring element.

7. Expanding rivet connection according to any one of the preceding claims, wherein two spacers (114) are arranged opposite each other on the expanding rivet (11) between the expanding rivet body (110) and the threaded part (111).

8. Expanding rivet connection according to any one of the preceding claims, wherein the thickness of the spacer (114) corresponds to the distance between the first and the second joining partner (21, 22).

9. Expanding rivet connection according to any one of the preceding claims, wherein each of the spacers (114) is differently or equally designed as a cylinder, as a sphere, cone or double cone, or has a rectangular shape.

10. Expanding rivet connection according to any one of the preceding claims, wherein the spacer (114) is formed around the entire circumference of the threaded part (111) .

11. Expanding rivet connection according to any one of the preceding claims, wherein the expanding rivet body (110) and/or the threaded part (111) and/or the expanding rivet pin (12) and/or the clamping element (13) are formed from fibreglass.

12. Method for mounting the expanding rivet connection (100) according to any one of the preceding claims, comprising the following steps:
- Step 1: inserting the expanding rivet body (110) of the expanding rivet (11) into recesses of the first joining partner (21) and the other joining partner(s) (22), if present;
- Step 2: inserting the expanding rivet pin (12) into the opening (112) of the expanding rivet (11), such that a firm connection is established between the first joining partner (21) and the other joining partner(s) (22), if present;
- Step 3: applying at least one third joining partner (23) to the first joining partner (21) or to the other joining partners (22) connected to the first joining partner (21) via the threaded part (111) of the expanding rivet (11);
- Step 4: Attaching the at least one third joining partner (23) to the first joining partner (21) or the other joining partner(s) (22) connected to the first joining partner (21) by means of the clamping element (13), wherein at least one stop (113) is arranged on the expanding rivet (11) at least between the expanding rivet body (110) and the threaded part (111), and wherein at least one spacer (114) is arranged on the expanding rivet (11) between the expanding rivet body (110) and the threaded part (111).

13. Method according to claim 12, wherein the method comprises a further step 2a between steps 2 and 3: Inserting the first joining partner (21) provided with the expanding rivet (11) or the first and further joining partners (21, 22) connected to the expanding rivet (11) into a device for establishing electrical contact between the joining partners (21, 22).

## Revendications

1. Liaison par rivet expansible (100) pour raccorder au moins deux partenaires d'assemblage (21, 23), comprenant :
- un rivet expansible (11), comprenant
un corps de rivet expansible (110) qui est formé de telle sorte qu'il puisse être inséré à travers des évidements du premier partenaire d'assemblage (21), et
une partie filetée (111) qui est formée de telle sorte qu'elle dépasse au moins partiellement du premier partenaire d'assemblage (21) après l'insertion,
- une tige de rivet expansible (12) qui est configurée pour être insérée à travers une ouverture (112) ménagée dans le rivet expansible (11) dans le corps de rivet expansible (110) afin de dépasser en saillie à travers le premier partenaire d'assemblage (21), et
- un élément de serrage (13), qui est prévu pour être vissé sur la partie filetée (111) du rivet expansible (11) afin de relier au moins un troisième partenaire d'assemblage (23) au premier partenaire d'assemblage (21), dans lequel sur le rivet expansible (11) au moins une butée (113) est disposée entre le corps de rivet expansible (110) et la partie filetée (111) et au moins une entretoise (114) est disposée sur le rivet expansible (11) entre le corps de rivet expansible (110) et la partie filetée (111).

2. Liaison par rivet expansible (100) selon la revendication 1 pour relier au moins trois partenaires d'assemblage (21, 22, 23), dans laquelle :
- le corps de rivet expansible (110) est formé de telle sorte qu'il puisse également être inséré à travers des évidements dans un deuxième partenaire d'assemblage (22) disposé sur le premier partenaire d'assemblage (21), et
- la partie filetée (111) est formée de telle sorte qu'elle dépasse au moins partiellement du premier partenaire d'assemblage (21) et du deuxième partenaire d'assemblage (22) après insertion,
- la tige de rivet expansible (12) est conçue pour être insérée à travers l'ouverture (112) disposée dans le rivet expansible (11) dans le corps de rivet expansible (110), de sorte à relier le premier partenaire d'assemblage (21) et le deuxième partenaire d'assemblage (22) l'un à l'autre, et
- l'élément de serrage (13) est conçu pour être vissé sur la partie filetée (111) du rivet expansible (11), pour relier au moins un troisième partenaire d'assemblage (23), qui est disposé sur le deuxième partenaire d'assemblage (22) relié au premier partenaire d'assemblage (21) .

3. Liaison par rivet expansible selon la revendication 1 ou 2, dans laquelle l'élément de serrage (13) est conçu comme un élément de ressort sous la forme d'un écrou sur lequel est disposé un ressort à lame.

4. Liaison par rivet expansible selon une des revendications précédentes, dans lequel le corps du rivet expansible (110) est rond ou n-angulaire et la partie filetée (111) est n-angulaire.

5. Rivet expansible selon une des revendications précédentes, dans lequel la butée (113) est conçue de telle sorte qu'une surface (1131) tournée vers la partie filetée (111) serve de sécurité avant de retirer le rivet expansible (11) lorsque l'élément de serrage (13) est utilisé, et l'épaisseur de la butée (113) spécifie la course (W) de la précontrainte générée par vissage sur l'élément de serrage (13).

6. Liaison par rivet expansible selon une des revendications précédentes, dans lequel l'entretoise (114) est reliée au rivet expansible (11) via au moins un élément élastique.

7. Liaison par rivet expansible selon une des revendications précédentes, dans lequel deux entretoises (114) opposées l'une à l'autre sur le rivet expansible (11) entre le corps de rivet expansible (110) et la partie filetée (111) sont disposées.

8. Liaison par rivet expansible selon une des revendications précédentes, dans lequel l'épaisseur de l'entretoise (114) correspond à la distance entre le premier et le deuxième partenaire d'assemblage (21, 22) .

9. Liaison par rivet expansible selon une des revendications précédentes, dans lequel chacune des entretoises (114) est configurée différemment ou à l'identique sous forme de cylindre, de bille, de cône ou de double cône est formé ou présente une forme rectangulaire.

10. Liaison par rivet expansible selon une des revendications précédentes, dans lequel l'entretoise (114) est formée sur toute la circonférence de la partie filetée (111).

11. Liaison par rivet expansible selon une des revendications précédentes, dans lequel le corps du rivet expansible (110) et/ou la partie filetée (111) et/ou la tige de rivet expansible (12) et/ou l'élément de serrage (13) sont constitués de matière plastique en fibre de verre.

12. Procédé de montage de la liaison par rivet expansible (100) selon une quelconque des revendications précédentes, comprenant les étapes suivantes :
- Etape 1 : insertion du corps de rivet expansible (110) du rivet expansible (11) dans les évidements du premier partenaire d'assemblage (21) et du ou des autres partenaires d'assemblage (22), le cas échéant,
- Etape 2 : insertion de la tige du rivet expansible (12) dans l'ouverture (112) du rivet expansible (11), de sorte qu'une liaison solide entre le premier partenaire d'assemblage (21) et le ou les autres partenaires d'assemblage (22), le cas échéant,
- Étape 3 : application d'au moins un troisième partenaire d'assemblage (23) au premier partenaire d'assemblage (21) ou à l'autre partenaire d'assemblage (22) relié au premier partenaire d'assemblage (21) via la partie filetée (111) du rivet expansible (11),
- Étape 4 : fixation du au moins un troisième partenaire d'assemblage (23) au moyen de l'élément de serrage (13) au premier partenaire d'assemblage (21) ou à l'autre partenaire d'assemblage (22) relié au premier partenaire d'assemblage (21), avec le rivet expansible (11) au moins entre le corps de rivet expansible (110) et la partie filetée (111) au moins une butée (113) est disposée, et sur le rivet expansible (11) entre le corps de rivet expansible (110) et la partie filetée (111) au moins une entretoise (114) est disposée.

13. Procédé selon la revendication 12, **caractérisé en ce qu'**il comprend une étape supplémentaire 2a entre les étapes 2 et 3 : introduction du premier partenaire d'assemblage (21) pourvu du rivet expansible (11) ou du premier et des autres partenaires d'assemblage (21, 22) reliés par rivet (11) dans un dispositif pour générer des contacts électriques entre les partenaires d'assemblage (21, 22).
